# FASCICULE DE BREVET EUROPEEN

(11) **EP 3 423 267 B1**
(45) Date de publication et mention de la délivrance du brevet: **14.07.2021**
(21) Numéro de dépôt: 17707934.0
(22) Date de dépôt: 06.03.2017
(51) Int. Cl.: B29D 99/00

(54) **PROCÉDÉ ET DISPOSITIF POUR LA FABRICATION D'UNE PIÈCE CREUSE EN MATÉRIAU COMPOSITE ET PALE D'HÉLICE OBTENUE PAR UN TEL PROCÉDÉ**
VERFAHREN UND VORRICHTUNG ZUR HERSTELLUNG EINES HOHLEN TEILS AUS EINEM VERBUNDWERKSTOFF UND NACH DIESEM VERFAHREN HERGESTELLTE TURBINENSCHAUFEL
METHOD AND DEVICE FOR MANUFACTURING A HOLLOW PART MADE OF A COMPOSITE MATERIAL AND TURBINE BLADE PRODUCED BY THIS METHOD

(30) Priorité: 04.03.2016 FR 1670083
(43) Date de publication de la demande: 09.01.2019
(73) Titulaire: Institut De Recherche Et De Technologie Jules Vern, 44340 Bouguenais (FR)
(72) Inventeur: MARCHAND, Christophe, 44400 Rezé (FR)
(74) Mandataire: Alatis
(86) Numéro de dépôt international: PCT/EP2017/055228
(87) Numéro de publication internationale: WO 2017/149166

(56) Documents cités:
- WO-A1-2012/042261
- DE-C1- 3 738 216
- US-A- 4 260 332
- US-A1- 2015 354 541

## Description

L'invention concerne un procédé et un dispositif pour la fabrication d'une pièce creuse en matériau composite et une pale d'hélice obtenue par un tel procédé. L'invention est plus particulièrement, mais non exclusivement, dédiée à la fabrication d'une pale d'hélice destinée à une turbine marémotrice, ou hydrolienne.

La réalisation d'une pale d'hélice en matériau composite, notamment pour une hydrolienne, permet de réduire considérablement le poids et l'inertie de l'hélice comprenant une telle pale et par suite, notamment, de produire de l'énergie en présence de courants nautiques faibles. Selon l'art antérieur, une pale d'hydrolienne en matériau composite comprend une aile qui s'étend radialement entre le rayon intérieur et le rayon extérieur de la pale, et en section, entre le bord d'attaque et le bord de fuite. Une zone de raccordement, située sous le rayon intérieur de l'aile, permet de raccorder la pale à une bride, généralement métallique, réalisant ainsi le pied de pale pour la fixation de ladite pale au rotor de l'hélice. Selon l'art antérieur, la bride métallique est assemblée avec la zone de raccordement par boulonnage, ce qui implique la réalisation de perçages dans le matériau composite constituant la pale afin de connecter les deux pièces par des fixations métalliques. Au cours du fonctionnement de l'hélice, les parois desdits perçages sont sollicitées en matage par les fixations, ce type de sollicitation étant particulièrement sévère pour un matériau composite à renfort fibreux. Ainsi, le dimensionnement de cette zone de raccordement et de sa liaison avec l'aile devient un paramètre prépondérant dans le dimensionnement de la pale, et d'une manière générale, conduit à une augmentation de sa masse, au détriment des performances de l'hydrolienne comprenant une telle pale.

Le document US 2015/0354541 décrit une méthode de réalisation du pied d'une pale en matériau composite, dans laquelle la partie métallique cylindrique du pied de pale comprend des rainures longitudinales, ou cannelures, s'étendant sensiblement parallèlement à l'axe de révolution du cylindre. Lors de la réalisation du pied de pale, les fibres sont enroulées sur cette partie métallique cannelée, alors que des mèches de fibres sont placées en fond de cannelure. L'ensemble de la stratification est ensuite imprégnée de résine de sorte à constituer le matériau composite. Ce mode de réalisation permet de transmettre des efforts de cisaillement / torsion entre le pied de pale et la pale mais n'offre pas de résistance aux efforts de traction résultant, par exemple, des forces centrifuges liées à la rotation de la pale.

Le document DE 3738216 décrit un mode de réalisation d'un pied de pale pour une pale en matériau composite. Le pied de pale comprend un insert métallique de forme conique comprenant un épaulement ou une conicité inversée à son extrémité distale. L'extrémité intérieure de la pale, du côté du rotor de l'hélice, épouse le profil extérieur de cet insert. Une couche stratifiée est bobinée autour de cette extrémité de sorte à lui conférer une forme conique simple, sans épaulement ni double conicité, et cette extrémité conique est insérée dans un fourreau et liée en rotation à celui-ci par l'intermédiaire d'une goupille traversante ou d'un pion radial. Cet ensemble est inséré dans un réceptacle du rotor.

Le document US 4 269 332 décrit un mode de réalisation d'un pied de pale d'une pale réalisée en matériau composite en enroulement filamentaire. La pale comporte un longeron de section creuse en forme de D qui s'étend le long du bord d'attaque de la pale et un noyau en mousse polyurétane, autour desquelles la voilure est réalisée par enroulement filamentaire. Le longeron assure la rigidité de la pale d'une manière générale, et sa liaison avec le pied de pale. Ledit pied de pale comprend un insert métallique conique comportant des rainures circonférentielles. Le longeron raidisseur épouse la forme des dites rainures sur l'insert et une couronne composite stratifiée est enroulée autour de celui-ci, de sorte à le maintenir dans lesdites rainures circonférentielles. Selon un autre mode de réalisation, une pièce métallique, boulonnée dans l'insert, vient coiffer la portion du longeron s'étendant sur ledit insert. Ce mode de réalisation, par enroulement filamentaire est complexe de mise en oeuvre sur une pale de grande dimension.

Toujours selon l'art antérieur, sauf lorsqu'elle est réalisée entièrement par enroulement filamentaire, l'aile de la pale est réalisée par l'assemblage de deux demi-pales, l'une correspondant à l'intrados et l'autre à l'extrados. La jonction entre les deux parties, notamment au niveau du bord d'attaque, doit être lisse, ce qui implique une grande précision de réalisation ou des ajustements ultérieurs, ayant des répercussions sur le coût de réalisation.

L'invention vise à résoudre les inconvénients de l'art antérieur et concerne à cette fin une pale d'hélice creuse selon la revendication 1, notamment une pale d'hydrolienne, constituée d'un matériau composite à renfort fibreux continu et comportant un pied de pale comprenant une bride métallique pour la liaison de ladite pale avec un rotor, dans laquelle, ladite bride est liée à l'aile de la pale lors du moulage de ladite pale, la bride comprenant une bride avant, sous la forme d'un tube épaulé et une bride arrière, sous la forme d'une couronne et dans laquelle la pale comporte un raccord de pied de pale constitué d'un matériau composite à renfort fibreux continu, enroulé autour du tube de la bride avant, et comprenant une extension radiale prise axialement en sandwich entre la bride avant et la bride arrière.

Ainsi, le pied de pale ne forme qu'une pièce avec l'aile de la pale et ne nécessite ni opération d'assemblage, ni perçage ni passage de fixation pour lier intimement la bride à la pale. Le poids de la pale est réduit tout comme le coût de sa fabrication. L'extension radiale, prise en sandwich entre les deux partie de la bride offre une grande résistance aux forces axiales, notamment centrifuges, et aux sollicitations de flexion auxquelles est soumise la pale, plus particulièrement le pied de pale, et permet la reprise de ces forces par toute l'épaisseur du matériau composite.

L'invention est avantageusement mise en œuvre selon les modes de réalisation et les variantes exposés ci-après, lesquels sont à considérer individuellement ou selon toute combinaison techniquement opérante.

Avantageusement, le renfort fibreux du pied de pale est un non-tissé de fibres à hautes performances. L'utilisation d'un non-tissé ou « *non crimp fabric* » (NCF) permet d'obtenir un taux de fibres élevé dans la zone de raccordement, les fibres étant conservées alignées avec les sollicitations, tout en permettant un drapage aisé autour de la bride

Avantageusement, les renforts fibreux des faces extrados et intrados de l'aile de la pale objet de l'invention sont raccordés selon une enture en biseau en dehors du bord d'attaque. Ce mode de réalisation implique la réalisation simultanée de l'ensemble de la pale, sans assemblage, et permet d'obtenir des surfaces hydrodynamiques adaptées, directement au moulage.

Avantageusement, la pale objet de l'invention comprend une zone de raccordement progressif, s'évasant vers le rayon extérieur de la pale, entre le pied et l'aile de ladite pale du côté du bord de fuite. Ainsi, d'une part, le flux d'effort entre l'aile et le pied de pale est concentré progressivement dans la section de la pale assurant un chargement réparti dans toute l'épaisseur de la stratification et dans tous les plis, et par ailleurs, ce raccordement progressif assure une imprégnation et une pénétration uniforme de la résine dans cette zone de forte épaisseur lors de l'opération de moulage.

Selon un mode de réalisation particulier, la pale objet de l'invention comprend un profilé de renfort s'étendant à l'intérieur de ladite pale entre les faces internes de l'extrados et de l'intrados de l'aile. Ce mode de réalisation permet à la pale de résister à des efforts plus élevés sans se déformer.

Il est également divulgué un outillage pour la réalisation d'une pale creuse, lequel outillage comprend :
u. une première demi-coquille comprenant une empreinte d'une face de la pale creuse ;
v. une deuxième demi-coquille comprenant une empreinte de l'autre face de la pale creuse ;
w. des moyens pour assembler les deux demi-coquilles de manière étanche de sorte à former une cavité moulante à la forme de la pale creuse ;
x. un noyau reproduisant la forme intérieure de la pale creuse, sous la forme d'une baudruche gonflable apte à être inséré dans la cavité moulante ;
y. des moyens de tirage au vide de la cavité moulante ;
t. des moyens de positionnement de la bride du pied de pale s'étendant entre les deux demi-coquilles et des moyens pour assembler ladite bride de manière étanche avec les deux demi-coquilles.

Un tel outillage permet la réalisation des deux faces de la pale creuse en une seule opération de moulage et l'intégration en seule pièce de l'aile, de la bride et du pied de pale.

Selon un mode de réalisation particulier, le noyau comprend deux baudruches gonflables individuellement. Ainsi le noyau est segmenté en plusieurs baudruches, plus faciles à réaliser et à introduire dans la cavité du moule, particulièrement lorsque la pièce réalisée et de très grande dimension.

Avantageusement le noyau gonflable comprend plusieurs compartiment gonflables individuellement.

Selon un mode de réalisation particulier, le noyau gonflable comprend une bâche interne et une bâche externe et des moyens pour contrôler la pression dans la bâche interne et dans l'espace compris entre la bâche interne et la bâche externe. Ainsi, par le contrôle des pressions de gonflage la rigidité et la compliance dudit noyau sont adaptées en fonction des phases du procédé mis en œuvre au moyen d'un tel outillage. Cette caractéristiques est avantageusement appliquée sur l'une ou sur la totalité des baudruches lorsque le noyau est segmenté selon le mode de réalisation particulier précédent.

Selon une variante perfectionnée de ce dernier mode de réalisation le noyau comprend une zone de maintien d'un profilé de renfort.

Selon des modes de réalisation, le noyau comprend un ou plusieurs compartiment remplis au moins partiellement d'une mousse à cellules ouvertes ou d'une mousse à cellules fermée. Ces modes de réalisation permettent de régler à la fois la pression appliquée à la préforme au cours des opérations d'injection de cuisson ou de compactage / consolidation, selon le mode de mise en oeuvre du procédé tout en conservant une certaine compliance et adaptabilité de la forme du noyau à la forme de la cavité moulant. Une mousse à cellules ouvertes est gonflable par l'injection d'un fluide sous pression, gazeux ou liquide dans ladite mousse, une mousse à cellules fermées est étanche.

Selon un mode de réalisation particulier, l'outillage est adapté à la mise en oeuvre d'un procédé de transfert de résine dans une préforme sèche et comprend des moyens d'adduction de résine dans la cavité moulante. La réalisation de la pale objet de l'invention à partir de préformes sèches permet d'obtenir un matériau composite comportant un taux de renfort important.

Avantageusement, l'outillage comprend :
z. une cale pentée reposant sur la surface formant plan de joint d'assemblage de l'une des demi-coquilles avec l'autre demi-coquille et dans un logement de l'autre demi-coquille, ledit logement comprenant une surface en bais coopérant avec ladite cale pentée pour plaquer les fibres d'une préforme sèche sur le noyau lors du rapprochement des deux demi-coquilles pour la fermeture de la cavité moulante.

La cale pentée agissant au niveau du plan joint permet d'obtenir, au moulage, une forme parfaite, du raccordement entre les deux parties de la pale notamment au niveau du bord d'attaque .

L'invention concerne également un procédé, selon la revendication 6, pour la fabrication d'une pale creuse.

Les drapages des deux faces de la forme creuse sont réalisés sur la même demi-coquille, ce qui permet notamment de raccorder les deux préformes en dehors du plan joint et sans assemblage. La bride est intégrée au pied de pale lors du moulage et forme un ensemble avec ledit pied de pale et l'aile de la pale.

Avantageusement, le procédé objet de l'invention comprend avant l'étape i) une étape consistant à réaliser une préforme du pied de pale intégrant les brides avant et arrière, l'étape i) consistant à placer la préforme du pied de pale ainsi obtenue à l'extrémité de la demi-coquille sur laquelle est drapée la préforme à l'étape ii).

Selon une autre variante, la bride étant montée sur l'outillage lors de l'étape i), la première étape ii) de drapage comprend une phase de drapage des plis de l'aile de la pale suivie d'une phase de drapage des plis situés au niveau du pied pale.

Avantageusement, l'intrados de l'aile de la pale est drapé au cours de l'étape ii) du procédé objet de l'invention, sur une surface plus large que l'empreinte de la demi-coquille correspondante, et le raccordement entre l'intrados et l'extrados de l'aile de la pale est réalisé par une enture en biseau placée dans l'empreinte de la deuxième demi-coquille et sur le noyau, à distance du plan de joint d'assemblage des deux demi-coquilles. Ce mode de réalisation permet d'obtenir un bord d'attaque de l'aile de la pale conforme au profil hydrodynamique recherché, directement au moulage.

Avantageusement, les plis des préformes de l'aile de la pale, drapées lors des étapes ii) et iv) sont constitués de fibres de verre continues et les plis correspondant à la préforme du pied de pale sont constitués d'un non-tissé de fibres de carbone. La réalisation du pied de pale en fibres de hautes performances pour la tenue mécanique. En outre, dans le cas d'un mode de réalisation de la pale à partir de fibres sèches, la différence de perméabilité entre les deux natures de stratifiés permet de favoriser le flux de résine vers le non-tissé lors du processus d'imprégnation par transfert de résine et d'obtenir la pénétration complète de la résine dans la zone de forte épaisseur prise en sandwich entre la bride avant la bride arrière en l'absence d'aménagement de drainage entre lesdites brides.

Avantageusement le procédé objet de l'invention met en œuvre un outillage comprenant un noyau gonflable comportant une bâche interne et une bâche externe et comprend après l'étape iv) les étapes consistant à :
v. fermer le moule en assemblant les deux demi coquilles ;
vi. tirer au vide la cavité moulante entre les deux demi-coquilles et comprenant les préformes
   la pression étant contrôlée dans la bâche interne et dans l'espace compris entre la bâche interne et la bâche externe du noyau au cours des étapes v) et vi) de sorte à contrôler l'épaisseur de la préforme au cours des opérations subséquentes.

Ainsi la rigidité du noyau est adaptée au besoin en fonction de la phase d'imprégnation ou de polymérisation de la résine.

Selon un mode de réalisation particulier, le gonflage de la bâche interne ou de la bâche externe du noyau est réalisé par l'injection de mousse expansible.

Selon un mode de mise en oeuvre du procédé objet de l'invention, les plis drapés sont des fibres préimprégnées d'un polymère, ce mode de réalisation est le plus économique.

Selon un autre mode de réalisation du procédé objet de l'invention les opérations de drapage des préformes sont réalisées avec des plis de fibres sèches et il comprend après l'étape vi) une étape consistant à :
vii. transférer de la résine dans les préformes.

Ce mode de réalisation permet d'obtenir des taux de renforts plus importants dans le composite constituant la pale.

Selon de dernier mode de réalisation, le procédé objet de l'invention comprend une étape de couture des préformes sèches entre elles.

L'invention est exposée ci-après selon ses modes de réalisation préférés, nullement limitatifs, et en référence aux figures 1 à 11, dans lesquelles :
- la figure 1 est une vue en perspective d'un exemple de réalisation d'une pale d'hydrolienne selon l'invention ;
- la figure 2 illustre selon des vues en perspective les différentes étapes d'un exemple de réalisation de la préforme constituant le pied de pale, la figure 2A montre un exemple de réalisation de la bride avant du pied de pale, la figure 2B montre l'installation sur cette bride avant sur un outillage en vue de la réalisation du drapage, la figure 2C illustre le drapage de la préforme par enroulement de plis et la figure 2D représente la préforme du pied de pale terminée avec la bride arrière ;
- la figure 3 représente selon un vue en perspective et en éclaté, un exemple de réalisation de l'outillage divulgué dans une configuration adaptée à la réalisation d'une pale d'hélice ;
- la figure 4 est une vue suivant F définie figure 3 montrant un exemple de réalisation des moyens de positionnement du pied de pale dans l'outillage de la figure 3 ;
- la figure 5 illustre, par un organigramme et une série de vues en perspective, le procédé de réalisation d'une pale selon l'invention en utilisant l'outillage de la figure 3 ;
- la figure 6 est une vue selon une coupe AA définie figure 5 de la préforme de la pale objet de l'invention dans l'outillage ;
- la figure 7 est une vue partielle, en perspective d la zone de raccordement entre le pied et l'aile de la pale objet de l'invention ;
- la figure 8 illustre, par un organigramme et une série de vues en perspective, une variante du procédé de réalisation d'une pale selon l'invention ;
- la figure 9 est une vue en coupe partielle selon BB définie figure 1, d'un exemple de réalisation d'une pale comprenant un profilé de renfort intérieur ;
- la figure 10 représente, selon une vue en perspective, un exemple de réalisation de l'outillage objet de l'invention, adapté à la réalisation de la pale représentée figure 9 ;
- et la figure 11 montre selon vue en perspective, une variante du noyau représenté en figure 10, dans laquelle le noyau est formé par plusieurs baudruches.

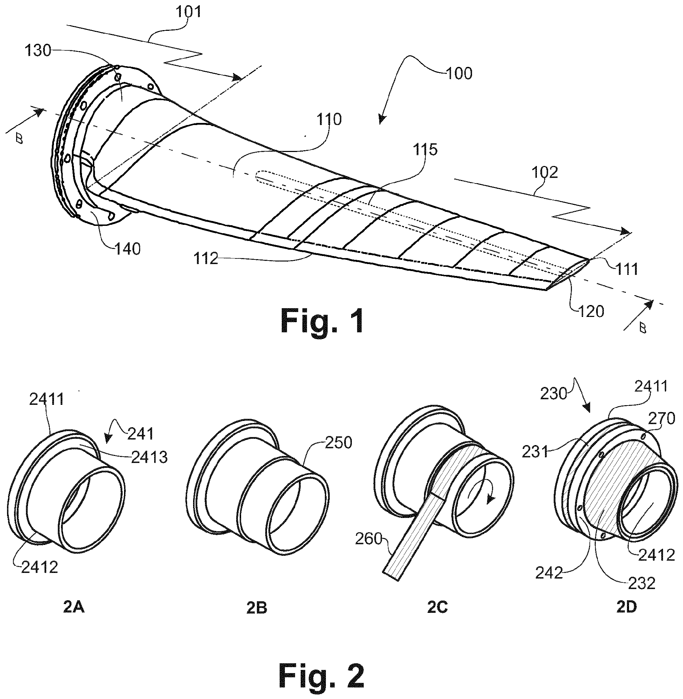

Figure 1, selon un exemple de réalisation, la pale (100) d'hydrolienne objet de l'invention, comprend une surface (110) extrados et une surface (120) intrados constituant l'aile de la pale et s'étendant radialement entre le rayon inférieur (101) et le rayon extérieur (102) de la pale. En section, la voilure s'étend entre le bord de fuite (112) et le bord d'attaque (111). La pale objet de l'invention comprend un pied (130) de pale, intégrant une bride (140) métallique pour le raccordement de ladite pale au rotor d'une hydrolienne. À titre d'exemple non limitatif, le rayon extérieur est compris entre 3 mètres et 20 mètres selon les applications visées, exceptionnellement entre 30 mètres et 40 mètres, et couramment compris entre 5 mètres et 10 mètres.

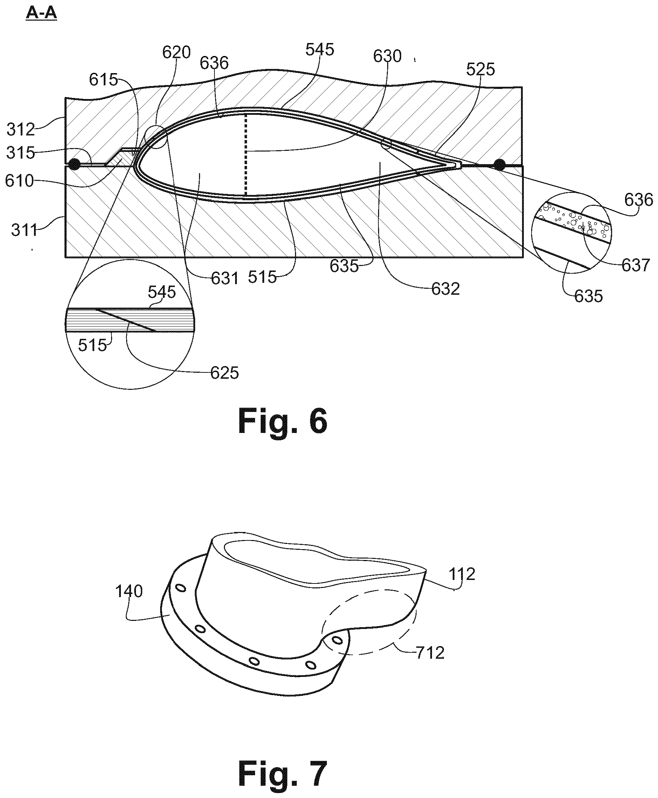

Figure 7, la pale objet de l'invention comprend avantageusement une zone (712) de raccordement progressif, s'évasant vers le rayon extérieur de la pale, entre le pied et l'aile de ladite pale du côté du bord de fuite (112).

Figure 2, selon un exemple de mise en œuvre du procédé objet de l'invention, la préforme du pied pale est obtenue en drapant un non-tissé sur la bride. Figure 2A, selon un exemple de réalisation la bride comprend une bride (241), dite bride avant, comprenant une portion (2412) cylindrique et un épaulement avec un raccordement (2413) progressif vers une couronne (2412) adaptée pour être montée sur le rotor de l'hydrolienne. À titre d'exemple non limitatif, la bride est constituée d'un matériau métallique résistant à la corrosion dans le milieu dans lequel la pale est destinée à fonctionner, tel qu'un acier inoxydable ou un alliage de titane. Le diamètre de la bride est de l'ordre de 2 mètres voire plus.

Figure 2B, pour réaliser la préforme du pied de pale, la bride avant est installée sur un mandrin (250) permettant son entraînement en rotation. Selon un exemple de réalisation, figure 2C, un non-tissé (260) de fibres de carbone est enroulé sur le mandrin (250) et sur la bride avant (241), en partant du mandrin (250) et en poursuivant vers la couronne (2411) et vice-versa jusqu'à obtenir l'épaisseur désirée de la préforme. Selon un mode de réalisation, les fibres déposées sont des fibres dites sèches, c'est-à-dire imprégnées de moins de 5 % de polymère. La faible teneur en polymère permet de stabiliser la préforme et à celle-ci de conserver la forme qui lui est donnée lors du drapage lorsqu'elle est manipulée avec précaution. À titre d'exemple non limitatif, le non-tissé, enroulé sur le mandrin et la bride avant, est un quadriaxial de fibres de carbone sur une épaisseur de 20 plis. Selon un autre mode de réalisation, les fibres sont déposées sous la forme d'un non-tissés préimprégné d'un polymère thermodurcissable.

Figure 2D, à l'issue du drapage, la préforme (230) du pied de pale s'étend en partie (232) sur la partie cylindrique (2412) de la bride avant qui s'étend jusqu'à la couronne de ladite bride. La bride (242) arrière est enfilée sur la préforme et prend en sandwich, avec la couronne (2411) de la bride avant, la partie (231) de ladite préforme s'étendant radialement. Selon un mode de réalisation particulier (non représenté), la bride arrière comprend deux demi-brides afin d'être enfilée sur la préforme sans l'endommager. Le mandrin (250) est retiré. Ainsi, la préforme du pied de pale comprend la bride de fixation. Selon un mode particulier de réalisation, une série de trous (270) est percée à travers les deux brides et la préforme fibreuse, pour faciliter le positionnement et le maintien en position de l'ensemble dans l'outillage de moulage.

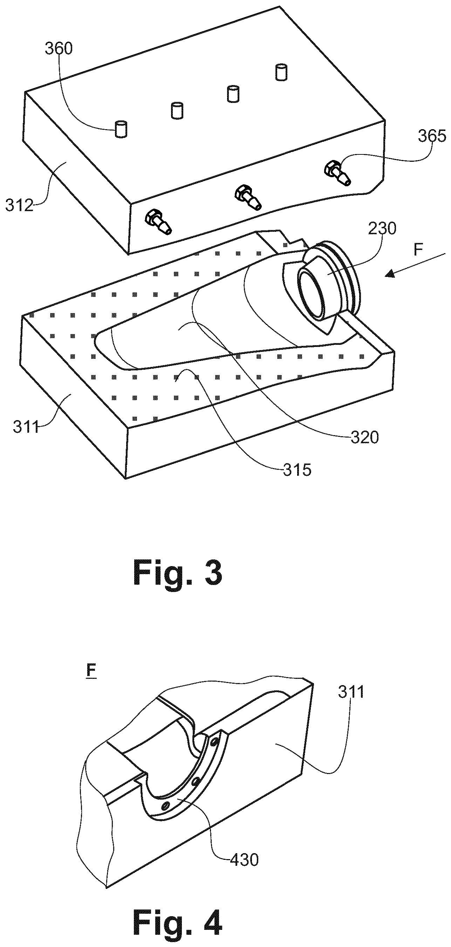

Figure 3, la pale objet de l'invention est réalisée dans un outillage spécifique permettant de transférer de la résine et/ou de réaliser la cuisson des préformes correspondant aux deux faces de son aile ainsi que la préforme correspondant au pied de pale au cours de la même opération, selon que les préformes sont réalisées à partir de plis secs ou de plis préimprégnés. Ledit outillage comprend deux demi-coquilles (311, 312) et des moyens (non représentés) pour assembler de manière étanche les deux demi-coquilles selon une surface (315) dite plan de joint. Chaque demi-coquille comporte une empreinte (320) reproduisant une partie de la forme de la pale, de sorte que les empreintes des deux demi-coquilles, une fois celles-ci assemblées, délimitent une cavité, dite cavité moulante, dont les parois reproduisent la forme de la pale. À titre d'exemple, l'empreinte (320) dans la première (311) demi-coquille reproduit la forme de l'intrados de la pale, alors que l'empreinte dans la deuxième (312) demi-coquille reproduit la forme de l'extrados de ladite pale.

Figure 4, chacune des demi-coquilles comprend des aménagements (430) et notamment des moyens d'étanchéité (non représentés) pour positionner et maintenir en position la préforme du pied de pale, notamment par les brides dudit pied de pale, lesquelles brides font ainsi partie de l'outillage.

En revenant à la figure 3, pour une mise en oeuvre du procédé objet de l'invention à partir de préformes sèches, au moins une des demi-coquilles comprend des moyens (360) d'adduction de résine pour imprégner ladite préforme sèche. Des moyens (365) permettent tirer au vide la cavité moulante une fois les deux demi-coquilles (311, 312) assemblées et l'étanchéité de la cavité réalisée, en vue de réaliser l'imprégnation de la préforme sèche ou la cuisson sous pression d'une préforme constituée de plis préimprégnés.

Selon des variantes de réalisation (non représentées) l'outillage comprend des moyens de chauffage autonomes par exemple sous la forme de canaux de circulation d'huile, de résistances électriques ou d'inducteurs.

Selon un mode de réalisation avantageux (non représenté) au moins l'une des empreintes comprend des éjecteurs pour faciliter le démoulage de la pale.

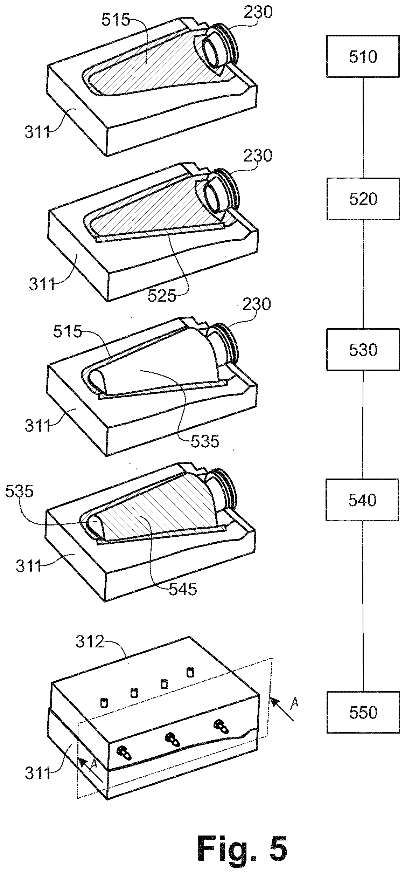

Figure 5, selon une première étape (510) de drapage du procédé objet de l'invention, appliqué à la réalisation d'une pale d'hydrolienne, la préforme (230) du pied de pale étant installée sur une des demi-coquilles de l'outillage, par exemple, la demi-coquille (311) correspondant à l'intrados de la pale, la préforme (515) correspondant à cette partie de la pale est drapée directement sur la demi-coquille (311). Selon un exemple de réalisation, ledit drapage comprend la dépose manuelle de renforts de verre multi-axiaux continus sous la forme de tissus ou de non-tissés, secs ou préimprégnés. Par exemple, la stratification comprend 35 plis d'un non-tissé de fibres de verre triaxial. Selon cet exemple de réalisation, le drapage de l'intrados est réalisé sur une surface plus large que la surface de l'empreinte afin de permettre le raccordement avec la préforme de l'extrados en dehors du bord d'attaque de l'aile. Au cours d'une deuxième étape de drapage (520), la préforme (525) correspondant au bord de fuite de l'aile est mise en place dans l'outillage. Selon des variantes de réalisation, ladite préforme (525) est drapée directement dans la demi-coquille (311) ou drapée en dehors de l'outillage et installée dans celui-ci. Au cours d'une étape (530) de préparation du troisième drapage, un noyau (535) est placé dans l'empreinte, sur la préforme (515) drapée lors du premier drapage. Selon un exemple de mise en œuvre, ledit noyau (535) est une baudruche ou vessie, insérée par l'alésage de la préforme (230) du pied de pale puis gonflée. Avantageusement, le noyau comprend un tracé pour faciliter le positionnement des plis sur ledit noyau lors de l'opération de drapage subséquente. Au cours d'une troisième étape (540) de drapage, la préforme (545) correspondant à l'extrados est drapée sur le noyau (535).

Selon une variante de mise en œuvre mettant en oeuvre des préformes sèches, les préformes (515, 525, 545) sont cousues entre-elles.

Au cours d'une étape (550) de cuisson ou d'imprégnation, la deuxième demi-coquille (312) est replacée sur la première demi-coquille (311), le noyau étant toujours à l'intérieur de la cavité moulante. L'alésage correspondant au pied de pale et fermé de manière étanche de sorte à constituer une cavité moulante fermée et étanche entre les deux parties de l'outillage. Ladite cavité moulante comprenant les préformes (230, 515, 525, 545) et le noyau est tirée au vide. Selon des variantes de mise en œuvre, l'outillage est placé en étuve, ou si ledit outillage comprend des moyens de chauffage autonomes, ceux-ci sont actionnés afin de porter ledit outillage, et les préformes, à la température adaptée à l'imprégnation par transfert, ou à la polymérisation de la résine imprégnant les plis, selon le mode de mise en oeuvre. Selon des variantes de mise en œuvre du procédé objet de l'invention, le transfert de résine dans les préformes sèches est réalisé par infusion ou par injection sous pression, la progression du front de résine dans la préforme étant parallèle ou perpendiculaire aux plis. L'utilisation d'un procédé d'injection mettant en œuvre des moyens d'injection de forte capacité permet la réalisation en série de pales à des cadences de production élevées.

Les préformes fibreuses étant imprégnées par transfert de résine ou lorsque la mise en oeuvre est réalisée à partir de plis préimprégnés, l'outillage est porté à la température de cuisson de la résine et maintenu à cette température jusqu'à ce que la résine soit polymérisée. L'outillage est alors refroidi jusqu'à une température de démoulage avant de procéder à la séparation des deux demi-coquilles et au démoulage de la pale. Selon un mode de réalisation, la résine utilisée pour imprégner et polymériser les préformes (515, 525, 545, 230) est une résine thermodurcissable. Selon un exemple de réalisation, la résine est de type vinylester, le transfert est réalisé par injection à 40 °C et la température cuisson est de 130 °C.

Figure 6, cavité moulante étant fermée et délimitant un volume constant, le contrôle de la pression dans le noyau gonflable permet de maîtriser l'épaisseur et la pression appliquée à la stratification lors de ces opérations. Cette caractéristiques est également avantageuse lors d'une mise en oeuvre à partir de plis préimprégnés d'un polymère thermoplastique afin de maîtriser le foisonnement du polymère lors de sa mise en fusion et réaliser le compactage et la consolidation de la préforme.

Selon un mode de réalisation particulier mettant en oeuvre des préformes sèches, l'imprégnation par transfert comporte plusieurs phases de sorte à injecter différentes natures de résine et obtenir des propriétés différentes à différentes sections ou épaisseurs de la pale, notamment pour améliorer la résistance aux impacts à la surface de la pale.

Figure 6, le drapage de l'intrados étant plus large que l'empreinte, le raccordement (620) entre la préforme (515) de l'intrados et la préforme (545) de l'extrados est réalisé dans l'empreinte de la deuxième demi-coquille (312) en dehors du bord d'attaque et au-dessus du plan de joint (315) du moule. Ce raccordement est réalisé selon une enture (625) en biseau sur une longueur de l'ordre de 10 fois l'épaisseur de la stratification. Le même mode de raccordement est utilisé entre la stratification de la préforme (545) de l'extrados avec la préforme (525) du bord de fuite, ainsi qu'entre cette dernière et la préforme (515) de l'intrados, de même qu'au raccordement entre les stratifications des préformes (515, 525) réalisant l'aile avec celle du pied de pale.

De manière à plaquer correctement les fibres sur le noyau (535) au niveau du bord d'attaque, une cale (610) pentée est placée dans un logement (615) de l'une des demi-coquilles de l'outillage, laquelle cale (610) repose sur la surface de plan de joint (315) de l'autre demi-coquille (311) lorsque les deux demi-coquilles sont assemblées. Le logement (615) de la cale comprend une surface biaise qui coopère avec ladite cale (610) de sorte à pousser les fibres de la préforme (515) contre le noyau (535) dans la zone de bord d'attaque de la pale lorsque l'outillage est refermé. Ainsi la forme du bord d'attaque reproduit le profil visé au moulage. Cette disposition est avantageuse pour la réalisation de toute pièce creuse moulée en une seule opération d'injection / cuisson.

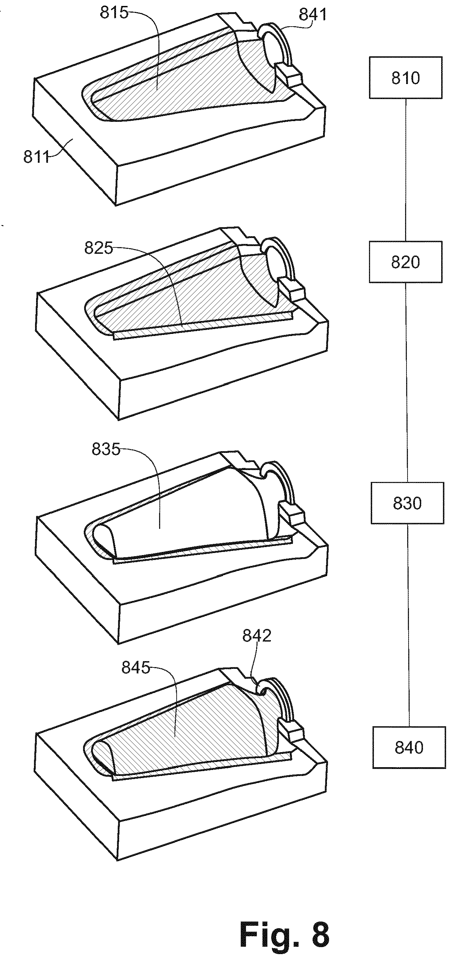

Figure 8, selon une variante du procédé objet de l'invention, la bride (841) avant est une simple couronne. Ladite bride avant est placée dans les moyens de maintien et de positionnement appropriés de la première demi-coquille (811) de l'outillage. Selon une première étape (810) de drapage, une première préforme (815), correspondant par exemple à l'intrados de la pale objet de l'invention, est drapée sur la demi-coquille (811). Selon un exemple de mise en œuvre, cette étape (810) de drapage comprend une première phase de drapage des plis de fibres de verre de l'aile de la pale suivie d'une phase de drapage du pied pale en fibres de carbone. Au cours d'une deuxième étape de drapage (820), la préforme (825) correspondant au bord de fuite de l'aile est installée dans l'outillage. Au cours d'une étape (830) de préparation du troisième drapage, un noyau (835) est placé dans l'empreinte sur la préforme (815) drapée lors du premier drapage. Selon une troisième étape (840) de drapage, la préforme (845) correspondant ici à l'extrados de la pale, est drapée sur le noyau et la bride arrière (842) est installée sous la forme de deux demi-couronnes. À titre d'exemple non limitatif, la troisième étape (840) de drapage, comprend une première phase de drapage des plis de verre correspondant à l'extrados, puis le drapage du pied pale avec des fibres de carbone. L'outillage est ensuite fermé en plaçant l'autre demi-coquille sur la première et en fermant l'alésage de la couronne, la cavité moulante est tirée au vide et selon le mode de mise en ouvre la stratification est cuite ou la résine est transférée dans la préforme pour son imprégnation, selon un procédé d'infusion ou un procédé d'injection, ou pour la cuisson de la préforme s'agissant d'une mise en oeuvre à partir de plis préimprégnés.

Selon une variante de mise en œuvre à partir de fibres sèches, les préformes (815, 825, 845) sont cousues entre-elles.

En revenant à la figure 1, la pale d'hydrolienne objet de l'invention est une pièce de grande dimension, la distance entre le rayon (101) intérieur et le rayon (102) extérieur atteignant plusieurs mètres, typiquement 5 mètres à 10 mètres. Selon des exemples de mise en œuvre et en fonction des cadences de production visées, les opérations de drapage et de positionnement des préformes et du pied de pale sont réalisées par des moyens automatisés tels que des robots ou des manipulateurs ou manuellement par des opérateurs.

En revenant aux figures 5 et 8, l'ordre des opérations décrit en référence à ces figures n'est pas limitatif et doit être adapté en fonction de la pièce réalisée, de ses dimensions et des cadences de production visées. Ainsi, selon des variantes de réalisation la préforme (525, 825) correspondant au bord de fuite est drapée ou est placée dans l'outillage avant le drapage de la préforme correspondant à l'intrados. Avantageusement des capteurs, par exemple sous la forme de fibres optiques ou de thermocouples sont intégrés à la préforme lors du drapage. De tels capteurs permettent par exemple de mesurer les contraintes mécaniques ou thermiques subies par la pale objet de l'invention lors de son utilisation ou encore de détecter des dommages.

Quel que soit le mode de réalisation, la rigidité du noyau est avantageusement contrôlable en fonction des opérations et de leur mode de mise en œuvre. Par exemple, lorsque les opérations de drapage des préformes sont réalisées en drapage manuel, les opérateurs réalisant ces drapages, sont susceptibles de se déplacer sur l'outillage et notamment de marcher sur le noyau (535, 835) lors de la troisième étape (540, 840) de drapage de l'extrados selon les exemples de réalisation décrits ci-avant. Ainsi, selon cet exemple de mise en œuvre non exclusif, ledit noyau (540, 840) doit être suffisamment rigide pour supporter le poids d'un opérateur, mais suffisamment souple pour se conformer à la forme de la cavité moulante et exercer une pression uniforme sur la partie interne de l'ensemble des préformes, afin d'assurer le respect des épaisseurs des stratifications.

En revenant à la figure 6, le noyau est avantageusement gonflable et comprend une bâche interne (635) et une bâche externe (636) aptes à être gonflées indépendamment l'une de l'autre. Le gonflage de la bâche (635) interne confère au noyau sa forme approximative et sa rigidité. Le gonflage de l'espace compris entre la bâche externe (636) et la bâche interne (635) permet de plaquer les préformes sur les parois de la cavité moulante et de s'adapter à la forme précise de ladite cavité moulante. À titre d'exemple non limitatif, les bâches internes et externes sont constituées d'un élastomère silicone renforcé ou non par des fibres.

Selon des variantes de réalisation, les moyens mis en oeuvre pour le gonflage du noyau, diffèrent entre la bâche interne (635) et la bâche externe (636). À titre d'exemples non limitatifs, la bâche interne ou la bâche externe est gonflée par une pression de gaz, par un fluide liquide tel que de l'huile ou de l'eau sous pression, ou encore par l'injection d'une mousse expansive. La mousse expansive est une mousse à cellules majoritairement fermée dont la dureté et la résistance à la compression sont données par sa composition et son mode de mise en oeuvre. Ainsi, selon un exemple de réalisation le gonflage de l'espace compris entre la bâche interne et la bâche externe permet lors de la réalisation de la première pièce d'adapter parfaitement la forme externe du noyau à la forme de la cavité moulante sous une pression de gonflage de la bâche interne donnée, et par suite de reproduire les conditions de mise en pression de la stratification lors de la réalisation des pièces suivantes.

Selon une autre variante de réalisation, compatible avec la précédente, l'espace du noyau délimité par la bâche interne ou l'espace compris entre la bâche interne et la bâche externe sont séparés par des cloisons internes (630) de sorte à constituer des compartiments (631 , 632) gonflables individuellement.

Selon un exemple de réalisation, au moins un compartiment du noyau est au moins partiellement rempli d'une mousse à cellules fermées ou à cellules ouvertes, plus précisément, à cellules majoritairement ouvertes ou à cellules majoritairement fermées comprenant plus de 70 % de l'une ou l'autre de ces catégories.

Figure 6, selon un exemple particulier de cette mise en oeuvre, une couche de mousse (637) à cellules fermées est insérée entre la bâche interne (635) et la bâche externe (636) du noyau, du côté de la bâche externe. Cette couche de mousse (637) procure une certaine adaptabilité de la forme du noyau à la forme de la cavité moulante lorsque l'espace compris entre la bâche interne (635) et la bâche externe (636) du noyau est gonflée Selon un autre exemple de réalisation (non représenté) l'intégralité du volume compris entre la bâche interne (635) et la bâche externe (636) est rempli d'une mousse à cellules ouvertes. Une telle mousse est gonflable par l'injection d'un fluide sous pression, liquide ou gazeux, dans ladite mousse. Ainsi, les propriétés de compliance de la mousse dans cet espace, permettent une première adaptation la forme du noyau à la forme de la cavité moulante lors du gonflage de la volume compris dans la bâche interne, puis d'appliquer une pression uniforme sur la stratification en gonflant la mousse comprise dans l'espace délimité entre la bâche interne et la bâche externe du noyau. La présence de la mouse dans cet espace facilite par ailleurs la manipulation du noyau et évite la formation de plis dans les bâches. Selon un mode de réalisation combiné, l'espace compris entre la bâche interne et la bâche externe comprend une première couche de mousse à cellules ouvertes et une couche de mousse à cellules fermées.

En revenant aux figures 5 et 8, lorsque le noyau (535, 835) est de type gonflable comportant une bâche interne et une bâche externe, la bâche interne est par exemple gonflée lors de la troisième étape (540, 840) de drapage afin, par exemple, de permettre à un opérateur de marcher sur le noyau et notamment d'ajuster les raccordements entre la préforme (515, 815) correspondant à l'intrados et la préforme (545, 845) correspondant à l'extrados de la pale. La bâche interne est au moins partiellement dégonflée avant la fermeture du moule. La bâche interne est dégonflée, avant ou pendant le tirage au vide de la cavité moulante de l'outillage et la pression dans l'espace compris entre les deux bâches est contrôlée de sorte à obtenir l'effet de conformation désiré.

En revenant à la figure 1, selon un exemple de réalisation, la pale objet de l'invention comprend un profilé (115) de renfort intégré sur la face interne de l'intrados ou sur la face interne de l'extrados ou entre les deux. Ledit profilé est par exemple un profilé en T, en I, en Ω (lettre grèque Oméga) ou toute autre section comprenant un pied, ou deux pieds s'il relie les deux faces internes.

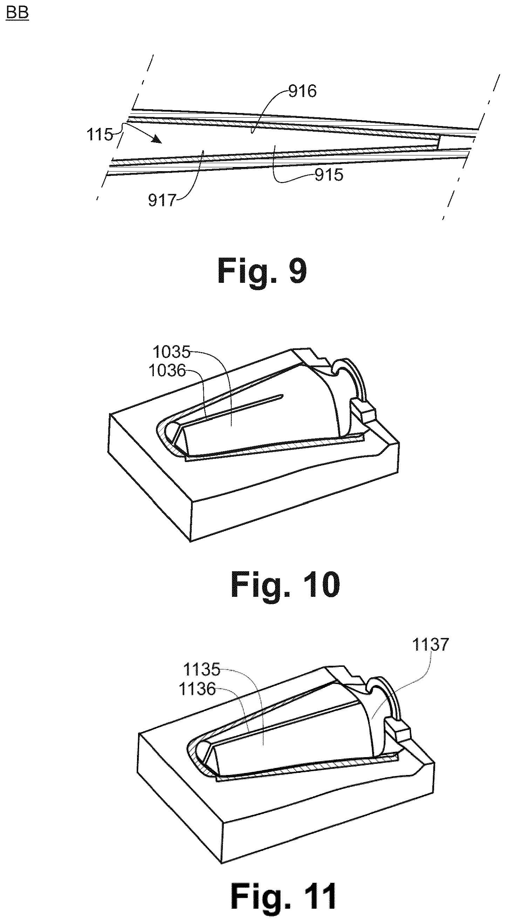

Figure 9, selon un exemple de réalisation le profilé de renfort (115) est en forme de I ou de H et comprend une âme (915) et deux pieds (916, 917) chacun desdits pieds étant lié à une face interne de l'aile.

En référence à la séquence d'opération des figures 5 et 8, pour la réalisation d'une pale selon le mode de réalisation de la figure 9 à partir de fibres sèches, après la première (510, 810) étape de drapage, la préforme constituant l'un des pieds du profilé est cousue à la préforme (515, 815) de l'intrados. La préforme constituant l'âme du profilé est tricotée avec la préforme constituant le pied du profilé de renfort. Jusqu'à la mise en place du noyau, ladite préforme de l'âme du profilé est maintenue sensiblement verticale par une ou plusieurs traverses de maintien. Dans le cas d'une mise en oeuvre du procédé objet de l'invention à partir de fibres préimprégnées, le profilé de renfort est précuit de sorte à obtenir une polymérisation partielle de sa matrice, la co-cuisson finale des préformes avec le profilé assure une polymérisation à travers l'interface entre a semelle du profilés et les préformes intrados et extrados de la pales, et une liaison par soudure de l'ensemble.=

Figure 10, selon cet exemple de mise en œuvre, le noyau gonflable comprend, dans sa partie opposée au pied de pale, une séparation (1036) réalisant une fente pour le maintien du profilé de renfort.

Ainsi, une fois la préforme du profilé de renfort maintenue dans cette fente par le gonflage du noyau (1035), les traverses de maintien de l'âme du profilé sont retirées. Avant la troisième étape de drapage de l'extrados sur le noyau (1035) gonflable, la préforme correspondant au second pied du profilé de renfort est tricotée avec l'âme dudit profilé, puis la préforme de l'extrados est drapée sur le noyau, pardessus ledit pied. Le contrôle de la pression de gonflage du noyau (1035) permet de maîtriser les conditions de maintien de la préforme du profilé de renfort au cours de ces divers opérations.

Figure 11, selon un autre exemple de réalisation, le noyau est constitué d'une pluralité de baudruches (1135, 1136, 1137) ce qui en facilite la réalisation et le placement dans l'empreinte du moule, mais permet également de maintenir un raidisseur ou une paroi interne entre deux baudruches. En dehors de l'utilisation de deux baudruches, ou plus, pour maintenir un élément interne, les baudruches sont, selon un mode de réalisation assemblées entre elles partout moyen connu de l'art antérieur, notamment par des bandes de crochets et boucles textiles de type Velcro®. Ce mode de réalisation permet en outre de contrôler individuellement la pression de gonflage de chaque baudruche (113, 1136, 1137) des sorte à adapter son effet sur la stratification de plis de la préforme, notamment au cours de la cuisson, en fonction, par exemple, des différences d'épaisseur de ladite stratification dans les zones d'action desdites baudruches. Chaque baudruche ou vessie est gonflable par une pression de gaz, par un fluide telle que de l'eau ou de l'huile ou par l'intermédiaire de l'injection d'une mousse expansive. Selon des modes de réalisation, l'ensemble de baudruches constituant le noyau comprend une ou plusieurs baudruches ou vessie comprenant une bâche interne et une bâche externe comme représenté figure 6.

La description ci-avant et les exemples de réalisation, montrent que l'invention atteint le but visé, et permet la réalisation d'une pièce creuse, notamment une pale d'hydrolienne en matériau composite, intégrant ses interfaces métalliques de fixation en une seule opération de moulage.

## Revendications

1. Pale (100) d'hélice creuse, notamment une pale d'hydrolienne, constituée d'un matériau composite à renfort fibreux continu et comportant une aile (110) et un pied (130) de pale comprenant une bride (140) métallique pour la liaison de ladite pale avec un rotor, dans laquelle ladite bride (140) est liée au pied de pale lors du moulage de ladite pale, et dans laquelle la bride comprend une bride avant (241), sous la forme d'un tube épaulé (2412) comprenant l'interface de montage avec un rotor, et une bride arrière (242), sous la forme d'une couronne (2411), **caractérisée en ce que** la pale comporte un raccord de pied de pale (232) constitué d'un matériau composite à renfort fibreux continu, enroulé autour du tube de la bride avant et comprenant une extension radiale (231) prise axialement en sandwich entre la bride avant et la bride arrière.

2. Pale selon la revendication 1, dans laquelle le renfort fibreux du pied de pale est un non tissé de fibres.

3. Pale selon l'une des revendications 1 à 2, dans laquelle les renforts fibreux des faces extrados et intrados de l'aile sont raccordés selon une enture (625) en biseau en dehors du bord d'attaque.

4. Pale selon l'une des revendications 1 à 3, comprenant une zone (712) de raccordement progressif, s'évasant vers le rayon (102) extérieur de la pale, entre le pied et l'aile de ladite pale du côté du bord de fuite (112).

5. Pale selon l'une des revendications 1 à 4, comprenant un profilé de renfort (115) s'étendant à l'intérieur de ladite pale entre les faces internes de l'extrados et de l'intrados de l'aile (110).

6. Procédé pour la fabrication d'une pale creuse selon l'une des revendications 1 à 5 utilisant un outillage du type comprenant :
u. une première demi-coquille (311) comprenant une empreinte (320) d'une face de la pale creuse ;
v. une deuxième demi-coquille (312) comprenant une empreinte de l'autre face de la pale creuse ;
w. des moyens pour assembler les deux demi-coquilles de manière étanche de sorte à former une cavité moulante à la forme de la pale creuse ;
x. un noyau (535, 835, 1035) reproduisant la forme intérieure de la pale creuse, sous la forme d'une baudruche gonflable apte à être inséré dans la cavité moulante ;
y. des moyens (365) de tirage au vide de la cavité moulante ;
t. des moyens (430) de positionnement de la bride du pied de pale s'étendant entre les deux demi-coquilles (311, 811, 312) et des moyens pour assembler ladite bride de manière étanche avec les deux demi-coquilles.
le procédé comprenant les étapes consistant à :
i. assembler la bride (241, 242, 841) du pied de la pale avec l'outillage ;
ii. draper (510, 810) une préforme sèche dans l'empreinte de l'une des demi-coquilles (311, 811) de l'outillage ;
iii. insérer (530, 830) le noyau (535, 835) dans l'empreinte sur la préforme réalisée à l'étape ii) et gonfler ledit noyau à une première pression de gonflage ;
iv. draper (540, 840) une préforme (545, 845) sèche correspondant à la partie complémentaire de celle réalisée à l'étape ii) sur le noyau (535, 835) inséré à l'étape iii).

7. Procédé selon la revendication 6, comprenant avant l'étape i) une étape consistant à réaliser une préforme (230) du pied de pale intégrant les brides (241, 242) avant et arrière, et dans lequel l'étape i) consiste à placer la préforme (230) du pied de pale ainsi obtenue à l'extrémité de la demi-coquille (311) sur laquelle est drapée la préforme (515) à l'étape ii).

8. Procédé selon l'une des revendications 6 à 7, dans lequel la première étape ii) de drapage (810) comprend une phase de drapage des plis de l'aile de la pale suivie d'une phase de drapage des plis de l'aile situés au niveau du pied pale.

9. Procédé selon l'une des revendications 6 à 8, dans lequel l'intrados de l'aile de la pale est drapé (510, 810) au cours de l'étape ii) sur une surface plus large que l'empreinte (320) de la demi-coquille (311, 811) correspondante, le raccordement entre l'intrados et l'extrados de l'aile de la pale étant réalisé par une enture (625) en biseau placée dans l'empreinte de la deuxième demi-coquille et sur le noyau, à distance du plan de joint (315) d'assemblage des deux demi-coquilles (311, 312).

10. Procédé selon l'une des revendications 6 à 9, dans lequel les plis des préformes de l'aile de la pale, drapées lors des étapes ii) et iv) sont constitués de fibres de verre continues et les plis correspondant à la préforme du pied de pale sont constitués d'un non-tissé de fibres de carbone.

11. Procédé selon l'une quelconque des revendications 6 à 10, comprenant après l'étape iv) les étapes consistant à :
v. fermer le moule en assemblant les deux demi-coquilles ;
vi. tirer au vide la cavité moulante entre les deux demi-coquilles et comprenant les préformes et dans lequel la pression est contrôlée dans une bâche interne (635) et dans l'espace compris entre la bâche interne (635) et une bâche externe (636) du noyau (535, 835, 1035) au cours des étapes v) et vi) de sorte à contrôler l'épaisseur de la préforme au cours des opérations subséquentes.

12. Procédé selon la revendication 11, dans lequel le gonflage de la bâche externe ou de la bâche interne du noyau est réalisé par l'injection de mousse expansible dans ladite bâche.

13. Procédé selon l'une quelconque des revendications 6 à 12 dans lequel les plis drapés sont des fibres préimprégnées d'un polymère.

14. Procédé selon l'une quelconque des revendications 6 à 13, comprenant une étape de couture des préformes entre-elles.

## Patentansprüche

1. Schaufelblatt (100) eines Hohlpropellers, insbesondere ein Unterwasserturbinenschaufelblatt, bestehend aus einem Verbundwerkstoff mit durchgehender Faserverstärkung und aufweisend ein Blatt (110) und eine Wurzel (130) des Schaufelblatts, die einen metallischen Flansch (140) zur Verbindung des Schaufelblattes mit einem Rotor umfasst, wobei der Flansch (140) mit der Wurzel des Schaufelblatts während des Formens des Schaufelblatts verbunden ist und wobei der Flansch einen vorderen Flansch (241) in Form eines Unterstützungsrohrs (2412), das die Montageschnittstelle mit einem Rotor umfasst, und einen hinteren Flansch (242) in Form eines Kranzes (2411) umfasst, **dadurch gekennzeichnet, dass** das Schaufelblatt ein Kuppelstück (232) der Wurzel des Schaufelblatts aufweist, das aus einem Verbundwerkstoff mit durchgehender Faserverstärkung besteht, der um das Rohr des vorderen Flansches gewickelt ist und eine radiale Verlängerung (231) umfasst, die axial zwischen den vorderen Flansch und den hinteren Flansch geklemmt ist.

2. Schaufelblatt nach Anspruch 1, wobei die Faserverstärkung der Wurzel des Schaufelblatts ein Faservlies ist.

3. Schaufelblatt nach einem der Ansprüche 1 bis 2, wobei die Faserverstärkungen der Ober- und Unterseite des Blatts an einer abgeschrägte Verbindung (625) außerhalb der Vorderkante verbunden sind.

4. Schaufelblatt nach einem der Ansprüche 1 bis 3, umfassend einen Bereich (712) mit progressiver Verbindung, der sich zum Außenradius (102) des Schaufelblatts hin erweitert, zwischen der Wurzel und dem Blatt des Schaufelblatts auf der Seite der Hinterkante (112).

5. Schaufelblatt nach einem der Ansprüche 1 bis 4, umfassend ein Verstärkungsprofil (115), das sich im Inneren des Schaufelblatts zwischen den Innenflächen der Oberseite und der Unterseite des Blatts (110) erstreckt.

6. Verfahren zum Herstellen eines Hohlschaufelblatts nach einem der Ansprüche 1 bis 5 unter Verwendung von Werkzeugen des Typs, umfassend:
u. eine erste Formhälfte (311), die einen Abdruck (320) einer Fläche des Hohlschaufelblatts umfasst;
v. eine zweite Formhälfte (312), die einen Abdruck der anderen Seite des Hohlschaufelblatts umfasst;
w. Mittel zum dichtenden Zusammenfügen der zwei Formhälften, um einen Formhohlraum in der Form des Hohlschaufelblatts zu bilden;
x. einen Kern (535, 835, 1035), der die innere Form des Hohlschaufelblatts nachbildet, in Form eines aufblasbaren Ballons, der geeignet ist, in den Formhohlraum eingeführt zu werden;
y. Mittel (365) zum Vakuumieren des Formhohlraums;
t. Mittel (430) zum Positionieren des sich zwischen den zwei Formhälften (311, 811, 312) erstreckenden Flansches der Wurzel des Schaufelblatts und Mittel zum dichtenden Zusammenfügen des Flansches mit den zwei Formhälften.
wobei das Verfahren die folgenden Schritte umfasst:
i. Zusammenfügen des Flansches (241, 242, 841) der Wurzel des Schaufelblatts mit dem Werkzeug;
ii. Drapieren (510, 810) einer trockenen Vorform in den Abdruck von einer der Formhälften (311, 811) des Werkzeugs;
iii. Einsetzen (530, 830) des Kerns (535, 835) in den Abdruck über der in Schritt ii) hergestellten Vorform und Aufblasen des Kerns auf einen ersten Aufblasdruck;
iv. Drapieren (540, 840) einer trockenen Vorform (545, 845), die dem komplementären Teil zu dem in Schritt ii) hergestellten Teil entspricht, über den in Schritt iii) eingeführten Kern (535, 835).

7. Verfahren nach Anspruch 6, das vor dem Schritt i) einen Schritt umfasst, der darin besteht, eine Vorform (230) der Wurzel des Schaufelblatts herzustellen, die den vorderen und den hinteren Flansch (241, 242) integriert, und bei dem der Schritt i) darin besteht, die so erhaltene Vorform (230) der Wurzel des Schaufelblatts am Ende der Formhälfte (311) zu platzieren, auf der die Vorform (515) im Schritt ii) drapiert wird.

8. Verfahren nach einem der Ansprüche 6 bis 7, wobei der erste Schritt ii) des Drapierens (810) eine Phase des Drapierens der Blattlagen des Schaufelblatts umfasst, gefolgt von einer Phase des Drapierens der an der Wurzel des Schaufelblatts befindlichen Blattlagen.

9. Verfahren nach einem der Ansprüche 6 bis 8, wobei die Unterseite des Blatts des Schaufelblatts während des Schritts ii) über eine breitere Fläche als der Abdruck (320) der entsprechenden Formhälfte (311, 811) drapiert wird (510, 810), wobei die Verbindung zwischen der Unterseite und der Oberseite des Blatts durch eine abgeschrägte Verbindung (625) hergestellt wird, die in der Prägung der zweiten Formhälfte und auf dem Kern in einem Abstand von der Ebene (315) der Zusammenfügung der zwei Formhälften (311, 312) angeordnet ist.

10. Verfahren nach einem der Ansprüche 6 bis 9, wobei die Lagen der Vorformen des Blatts des Schaufelblatt, die während der Schritte ii) und iv) drapiert werden, aus durchgehenden Glasfasern hergestellt werden, und die Lagen, die der Vorform der Wurzel des Schaufelblatts entsprechen, aus einem Kohlenstofffaservlies bestehen.

11. Verfahren nach einem der Ansprüche 6 bis 10, umfassend nach Schritt iv) die folgenden Schritte:
v. Schließen der Form durch Zusammenfügen der zwei Formhälften;
vi. Vakuumieren des Formhohlraums zwischen den zwei Formhälften, der die Vorformen umfasst, und wobei der Druck in einer inneren Plane (635) und in dem Raum zwischen der inneren Plane (635) und einer äußeren Plane (636) des Kerns (535, 835, 1035) während der Schritte v) und vi) gesteuert wird, um die Dicke der Vorform während der nachfolgenden Vorgänge zu steuern.

12. Verfahren nach Anspruch 11, wobei das Aufblasen der äußeren Plane oder der inneren Plane des Kerns durch Einspritzen von dehnbarem Schaum in die Plane erzielt wird.

13. Verfahren nach einem der Ansprüche 6 bis 12, wobei die drapierten Lagen mit einem Polymer vorimprägnierte Fasern sind.

14. Verfahren nach einem der Ansprüche 6 bis 13, umfassend einen Schritt des Zusammennähens der Vorformen.

## Claims

1. Hollow turbine blade (100), in particular a tidal stream generator blade, which is made of a continuous fiber reinforced composite material and which comprises a wing (110) and a blade root (130) that has a metal flange (140) for connecting said blade to a rotor, said flange (140) being connected to the blade root during the molding of said blade, and the flange having a front flange (241) which is in the form of a stepped tube (2412) and comprises the interface with a rotor, and a rear flange (242) which is in the form of a ring (2411), **characterized in that** the blade comprises a blade root connector (232) which consists of a continuous fiber reinforced composite material wrapped around the front flange tube and which comprises a radial extension (231) sandwiched axially between the front flange and the rear flange.

2. Blade according to claim 1, wherein the fiber reinforcement of the blade root is a fiber nonwoven.

3. Blade according to either claim 1 or claim 2, wherein the fiber reinforcements of the upper and lower surfaces of the wing are coupled in a beveled scarf joint (625) outside the leading edge.

4. Blade according to any of claims 1 to 3, comprising a gradual coupling zone (712) which widens toward the outer radius (102) of the blade between the root and the wing of said blade on the side of the trailing edge (112).

5. Blade according to any of claims 1 to 4, comprising a reinforcing profile (115) which extends inside said blade between the inner faces of the upper and lower surfaces of the wing (110).

6. Method for manufacturing a hollow blade according to any of claims 1 to 5, using equipment of the type comprising:
u. a first half-shell (311) comprising a mold (320) of one face of the hollow blade;
v. a second half-shell (312) comprising a mold of the other face of the hollow blade;
w. means for sealingly joining the two half-shells so as to form a molding cavity in the shape of the hollow blade;
x. a core (535, 835, 1035) which reproduces the internal shape of the hollow blade in the form of an inflatable balloon suitable for being inserted into the molding cavity;
y. means (365) for evacuating the molding cavity;
t. means (430) for positioning the flange of the blade root which extends between the two half-shells (311, 811, 312) and means for sealingly joining said flange to the two half-shells;
the method comprising the steps of:
i. joining the flange (241, 242, 841) of the blade root to the equipment;
ii. laying-up (510, 810) a dry preform in the mold of one of the half-shells (311,811) of the equipment;
iii. inserting (530, 830) the core (535, 835) into the mold on the preform produced in step ii) and inflating said core to a first inflation pressure;
iv. laying-up (540, 840) a dry preform (545, 845) which corresponds to the part complementary to that produced in step ii) on the core (535, 835) inserted in step iii).

7. Method according to claim 6, comprising, before step i), a step which consists in producing a preform (230) of the blade root incorporating the front and rear flanges (241, 242), wherein step i) consists in placing the thus produced preform (230) of the blade root at the end of the half-shell (311) on which the preform (515) is laid-up in step ii).

8. Method according to either claim 6 or claim 7, wherein the first step ii) of laying-up (810) comprises a stage of laying-up the plies of the wing of the blade followed by a stage of laying-up the plies of the wing located at the blade root.

9. Method according to any of claims 6 to 8, wherein the lower surface of the wing of the blade is laid-up (510, 810) during step ii) on a surface that is larger than the mold (320) of the corresponding half-shell (311, 811), the coupling between the lower surface and the upper surface of the wing of the blade being produced by an beveled scarf joint (625) located in the mold of the second half-shell and on the core at a distance from the parting line (315) of the two half-shells (311, 312).

10. Method according to any of claims 6 to 9, wherein the plies of the preforms of the wing of the blade laid-up during steps ii) and iv) consist of continuous glass fibers and the plies corresponding to the preform of the blade root consist of a carbon fiber nonwoven.

11. Method according to any of claims 6 to 10, comprising, after step iv), the steps of:
v. closing the mold by joining the two half-shells;
vi. evacuating the molding cavity which is between the two half-shells and comprises the preforms, wherein the pressure is controlled in an inner vessel (635) and in the space between the inner vessel (635) and an outer vessel (636) of the core (535, 835, 1035) during steps v) and vi) so as to control the thickness of the preform during subsequent operations.

12. Method according to claim 11, wherein the inflation of the outer vessel or the inner vessel of the core is achieved by injecting expandable foam into said vessel.

13. Method according to any of claims 6 to 12, wherein the laid-up plies are fibers preimpregnated with a polymer.

14. Method according to any of claims 6 to 13, comprising a step of stitching the preforms together.
